# EUROPEAN PATENT APPLICATION

(11) **EP 4 527 679 A2**
(43) Date of publication of application: **26.03.2025**
(21) Application number: 24191047.0
(22) Date of filing: 26.07.2024
(51) Int. Cl.: B60L 53/12, B60L 53/38, H02J 50/10, H02J 50/80, H02J 50/90

(54) **VEHICLE FOR WIRELESS CHARGING AND WIRELESS CHARGER**

(30) Priority: 20.09.2023 KR 20230125750
(71) Applicant: HYUNDAI MOBIS CO., LTD., Seoul 06141 (KR)
(72) Inventor: SON, Dae Gon, 07030 Seoul (KR)
(74) Representative: Frenkel, Matthias Alexander

(57) **Abstract**

A vehicle for performing wireless charging during vehicle driving includes: a wireless power receiver to wirelessly receive power from a wireless power transmitter; a transceiver to transmit and receive messages to and from the wireless power transmitter; and a controller to control the wireless power receiver. The controller generates a charging request including any one of vehicle identification information, a driving lane of the vehicle, and location coordinates of the vehicle, and transmits the charging request to a wireless power transmission system; receives a charging request response from the wireless power transmission system in response to the charging request; and performs vehicle steering control and driving speed control based on the charging request response.

## Description

### CROSS REFERENCE TO RELATED APPLICATION(S)

This application claims the benefit of Korean Patent Application No. 10-2023-0125750, filed on September 20, 2023, which is hereby incorporated by reference as if fully set forth herein.

### BACKGROUND

### Field of the Disclosure

The embodiments of the present disclosure relate to a vehicle for wireless charging, a charger, and a method for the same, and more particularly to an apparatus and method for increasing the efficiency of wireless charging.

### Discussion of the Related Art

As technology of electric vehicles and technology of autonomous driving have rapidly developed, it is expected that various occupants (hereinafter referred to as "users") will be able to engage in various activities within the vehicle. For example, a user may be a fallback-ready user (FRU) and thus be able to watch video or moving images or participate in video conferences, as long as he or she remains aware of the vehicle's surroundings and can be ready for fallback.

With the advent of the autonomous driving era, various sensors are being installed within vehicles. For example, cameras, microphone sensors, and heat detection sensors may be installed to check objects within the vehicle.

It is expected that infrastructure will be introduced to enable wireless charging of autonomous driving vehicles while driving through various sensors, wireless communication devices, or the like.

Within the above-described environment, since wireless charging is performed while the vehicle is driving, it is necessary to consider wireless charging efficiency with respect to specifications and capabilities of a wireless power transmitter, the driving speed and location of the vehicle, and the like.

### SUMMARY

An object of the present disclosure is to provide a vehicle for wireless charging and a method for the same.

Another object of the present disclosure is to provide a method for increasing wireless charging efficiency of a vehicle that is driving on a road.

Technical subjects to be solved by the present disclosure are not limited to the above-mentioned technical solutions, and it should be noted that other technical subjects not described above can be understood by those skilled in the art from the description of the present disclosure below.

In accordance with an embodiment of the present disclosure, a vehicle for performing wireless charging during vehicle driving includes: a wireless power receiver configured to wirelessly receive power from a wireless power transmitter; a transceiver configured to transmit and receive messages to and from the wireless power transmitter; and a controller configured to control the wireless power receiver. The controller is configured to: generate a charging request including any one of vehicle identification information, a driving lane of the vehicle, and location coordinates of the vehicle, and transmit the charging request to a wireless power transmission system; receive a charging request response from the wireless power transmission system in response to the charging request; and perform vehicle steering control and driving speed control based on the charging request response.

The controller may be configured to: determine whether the vehicle has entered a wireless charging road during driving, the wireless charging road allowing the vehicle to be wireless charged during driving; and calculate a driving lane of the vehicle and location coordinates of the vehicle according to an entry of the vehicle into the wireless charging road.

The controller may be configured to: measure efficiency of wireless charging during vehicle driving; and perform vehicle steering control and driving speed control when the efficiency is less than a reference value.

The controller may be configured to activate an autonomous driving mode upon receiving the charging request response.

The charging request response may include at least one of information about a lane of a wireless charging road which allows the vehicle to be wireless charged, charging line alignment information, and information about a driving speed at which a wireless charging of the vehicle is allowed.

In accordance with another embodiment of the present disclosure, a wireless charger for performing wireless charging of a vehicle during vehicle driving includes: a wireless power transmitter configured to wirelessly transmit power to a wireless power receiver; a transceiver configured to transmit and receive messages to and from the wireless power receiver; and a controller configured to control the wireless power transmitter. The controller is configured to: collect a wireless charging efficiency data according to a vehicle type and a driving speed for each road; and determine an optimal driving speed for each vehicle type based on the wireless charging efficiency data.

The controller may be configured to: transmit an optimal driving speed for each vehicle type to a wireless charging vehicle, and the wireless charging vehicle may be controlled to travel at the optimal driving speed.

In accordance with another embodiment of the present disclosure, a wireless charger for performing wireless charging of a vehicle during vehicle driving includes: a plurality of wireless power transmitters configured to wirelessly transmit power to a wireless power receiver; a transceiver configured to transmit and receive messages to and from the wireless power receiver; and a controller configured to control the wireless power transmitter. The controller is configured to: identify a mounting position of the wireless power receiver based on vehicle identification information received from a vehicle for wireless charging; and generate information about a lane for wireless charging or information about a wireless charging line alignment for wireless charging during driving based on the identified mounting position and a mounting position of a charging line on a wireless charging road during driving.

The controller may be configured to generate steering control information of the vehicle based on the information about a lane for wireless charging during driving and the information about a wireless charging line alignment.

The information about a wireless charging line alignment may include: a virtual line configured to interconnect coils of the plurality of wireless power transmitters installed under a surface of the road; and/or relative position information between the virtual line and lanes on the road.

It is to be understood that both the foregoing general description and the following detailed description of the present disclosure are exemplary and explanatory and are intended to provide further explanation of the disclosure as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 is an overall block diagram illustrating an autonomous vehicle to which an autonomous driving apparatus can be applied.
FIG. 2 is a schematic diagram illustrating an example vehicle to which an autonomous driving apparatus is applied.
FIG. 3 is a schematic diagram illustrating a system for wireless charging.
FIGS. 4, 5, 6, and 7 are flowcharts illustrating examples of a method for controlling wireless charging of a vehicle according to the proposed technology.

### DETAILED DESCRIPTION

Hereinafter, embodiments of the present disclosure will be described in detail with reference to the accompanying drawings so that the present disclosure may be easily realized by those skilled in the art. However, the present disclosure may be achieved in various different forms and is not limited to the embodiments described herein. In the drawings, parts that are not related to a description of the present disclosure are omitted to clearly explain the present disclosure and similar reference numbers will be used throughout this specification to refer to similar parts.

In the specification, when a part "includes" an element, it means that the part may further include another element rather than excluding another element unless otherwise mentioned.

In addition, in the specification, "occupant", "passenger", "driver", "user", etc. are mentioned for description of the present disclosure, and may be used interchangeably therewith.

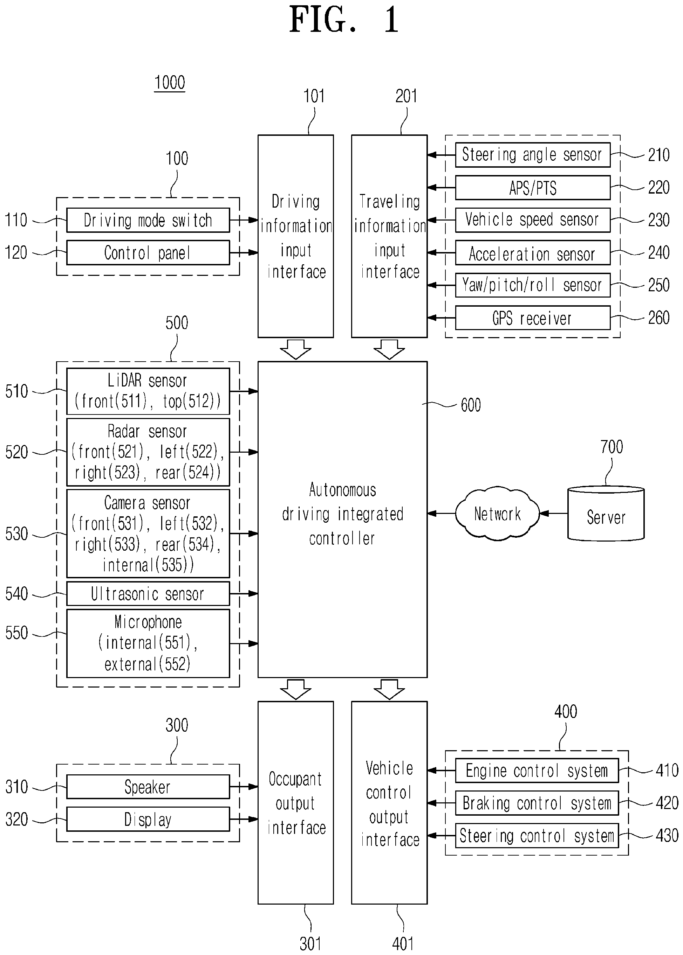

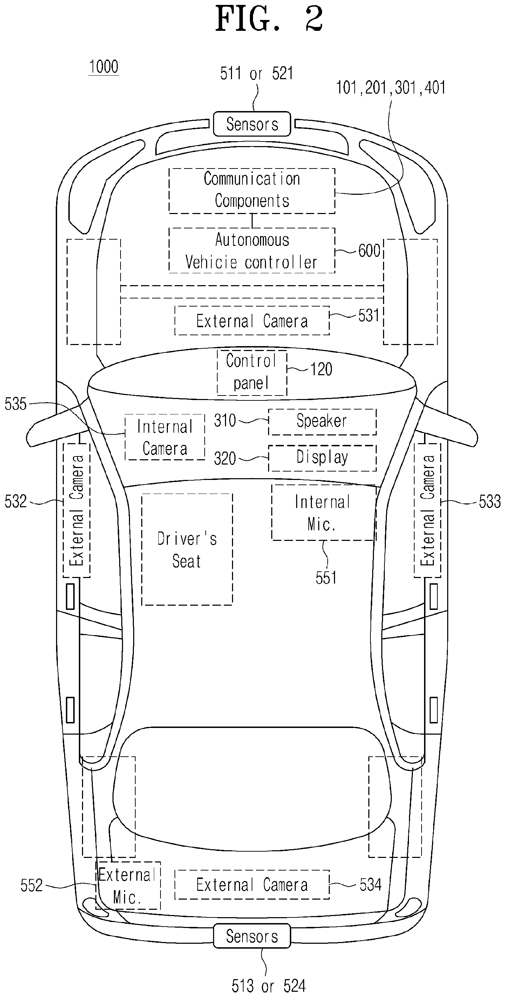

FIG. 1 is an overall block diagram of an autonomous driving control system to which an autonomous driving apparatus according to any one of embodiments of the present disclosure is applicable. FIG. 2 is a diagram illustrating an example in which an autonomous driving apparatus according to any one of embodiments of the present disclosure is applied to a vehicle.

First, a structure and function of an autonomous driving control system (e.g., an autonomous driving vehicle) to which an autonomous driving apparatus according to the present embodiments is applicable will be described with reference to FIGS. 1 and 2.

As illustrated in FIG. 1, an autonomous driving vehicle 1000 may be implemented based on an autonomous driving integrated controller 600 that transmits and receives data necessary for autonomous driving control of a vehicle through a driving information input interface 101, a traveling information input interface 201, an occupant output interface 301, and a vehicle control output interface 401. However, the autonomous driving integrated controller 600 may also be referred to herein as a controller, a processor, or, simply, a controller.

The autonomous driving integrated controller 600 may obtain, through the driving information input interface 101, driving information based on manipulation of an occupant for a user input unit 100 in an autonomous driving mode or manual driving mode of a vehicle. As illustrated in FIG. 1, the user input unit 100 may include a driving mode switch 110 and a control panel 120 (e.g., a navigation terminal mounted on the vehicle or a smartphone or tablet computer owned by the occupant). Accordingly, driving information may include driving mode information and navigation information of a vehicle.

For example, a driving mode (i.e., an autonomous driving mode/manual driving mode or a sports mode/eco mode/safety mode/normal mode) of the vehicle determined by manipulation of the occupant for the driving mode switch 110 may be transmitted to the autonomous driving integrated controller 600 through the driving information input interface 101 as the driving information.

Furthermore, navigation information, such as the destination of the occupant input through the control panel 120 and a path up to the destination (e.g., the shortest path or preference path, selected by the occupant, among candidate paths up to the destination), may be transmitted to the autonomous driving integrated controller 600 through the driving information input interface 101 as the driving information.

The control panel 120 may be implemented as a touchscreen panel that provides a user interface (UI) through which the occupant inputs or modifies information for autonomous driving control of the vehicle. In this case, the driving mode switch 110 may be implemented as touch buttons on the control panel 120.

In addition, the autonomous driving integrated controller 600 may obtain traveling information indicative of a driving state of the vehicle through the traveling information input interface 201. The traveling information may include a steering angle formed when the occupant manipulates a steering wheel, an accelerator pedal stroke or brake pedal stroke formed when the occupant depresses an accelerator pedal or brake pedal, and various types of information indicative of driving states and behaviors of the vehicle, such as a vehicle speed, acceleration, a yaw, a pitch, and a roll formed in the vehicle. The traveling information may be detected by a traveling information detection unit 200, including a steering angle sensor 210, an accelerator position sensor (APS)/pedal travel sensor (PTS) 220, a vehicle speed sensor 230, an acceleration sensor 240, and a yaw/pitch/roll sensor 250, as illustrated in FIG. 1.

Furthermore, the traveling information of the vehicle may include location information of the vehicle. The location information of the vehicle may be obtained through a global positioning system (GPS) receiver 260 applied to the vehicle. Such traveling information may be transmitted to the autonomous driving integrated controller 600 through the traveling information input interface 201 and may be used to control the driving of the vehicle in the autonomous driving mode or manual driving mode of the vehicle.

The autonomous driving integrated controller 600 may transmit driving state information provided to the occupant to an output unit 300 through the occupant output interface 301 in the autonomous driving mode or manual driving mode of the vehicle. That is, the autonomous driving integrated controller 600 transmits the driving state information of the vehicle to the output unit 300 so that the occupant may check the autonomous driving state or manual driving state of the vehicle based on the driving state information output through the output unit 300. The driving state information may include various types of information indicative of driving states of the vehicle, such as a current driving mode, transmission range, and speed of the vehicle.

If it is determined that it is necessary to warn a driver in the autonomous driving mode or manual driving mode of the vehicle along with the above driving state information, the autonomous driving integrated controller 600 transmits warning information to the output unit 300 through the occupant output interface 301 so that the output unit 300 may output a warning to the driver. In order to output such driving state information and warning information acoustically and visually, the output unit 300 may include a speaker 310 and a display 320 as illustrated in FIG. 1. In this case, the display 320 may be implemented as the same device as the control panel 120 or may be implemented as an independent device separated from the control panel 120.

Furthermore, the autonomous driving integrated controller 600 may transmit control information for driving control of the vehicle to a lower control system 400, applied to the vehicle, through the vehicle control output interface 401 in the autonomous driving mode or manual driving mode of the vehicle. As illustrated in FIG. 1, the lower control system 400 for driving control of the vehicle may include an engine control system 410, a braking control system 420, and a steering control system 430. The autonomous driving integrated controller 600 may transmit engine control information, braking control information, and steering control information, as the control information, to the respective lower control systems 410, 420, and 430 through the vehicle control output interface 401. Accordingly, the engine control system 410 may control the speed and acceleration of the vehicle by increasing or decreasing fuel supplied to an engine. The braking control system 420 may control the braking of the vehicle by controlling braking power of the vehicle. The steering control system 430 may control the steering of the vehicle through a steering device (e.g., motor driven power steering (MDPS) system) applied to the vehicle.

As described above, the autonomous driving integrated controller 600 according to the present embodiment may obtain the driving information based on manipulation of the driver and the traveling information indicative of the driving state of the vehicle through the driving information input interface 101 and the traveling information input interface 201, respectively, and transmit the driving state information and the warning information, generated based on an autonomous driving algorithm, to the output unit 300 through the occupant output interface 301. In addition, the autonomous driving integrated controller 600 may transmit the control information generated based on the autonomous driving algorithm to the lower control system 400 through the vehicle control output interface 401 so that driving control of the vehicle is performed.

In order to guarantee stable autonomous driving of the vehicle, it is necessary to continuously monitor the driving state of the vehicle by accurately measuring a driving environment of the vehicle and to control driving based on the measured driving environment. To this end, as illustrated in FIG. 1, the autonomous driving apparatus according to the present embodiment may include a sensor unit 500 for detecting a nearby object of the vehicle, such as a nearby vehicle, pedestrian, road, or fixed facility (e.g., a signal light, a signpost, a traffic sign, or a construction fence).

The sensor unit 500 may include one or more of a LiDAR sensor 510, a radar sensor 520, or a camera sensor 530, in order to detect a nearby object outside the vehicle, as illustrated in FIG. 1.

The LiDAR sensor 510 may transmit a laser signal to the periphery of the vehicle and detect a nearby object outside the vehicle by receiving a signal reflected and returning from a corresponding object. The LiDAR sensor 510 may detect a nearby object located within the ranges of a preset distance, a preset vertical field of view, and a preset horizontal field of view, which are predefined depending on specifications thereof. The LiDAR sensor 510 may include a front LiDAR sensor 511, a top LiDAR sensor 512, and a rear LiDAR sensor 513 installed at the front, top, and rear of the vehicle, respectively, but the installation location of each LiDAR sensor and the number of LiDAR sensors installed are not limited to a specific embodiment. A threshold for determining the validity of a laser signal reflected and returning from a corresponding object may be previously stored in a memory (not illustrated) of the autonomous driving integrated controller 600. The autonomous driving integrated controller 600 may determine a location (including a distance to a corresponding object), speed, and moving direction of the corresponding object using a method of measuring time taken for a laser signal, transmitted through the LiDAR sensor 510, to be reflected and returning from the corresponding object.

The radar sensor 520 may radiate electromagnetic waves around the vehicle and detect a nearby object outside the vehicle by receiving a signal reflected and returning from a corresponding object. The radar sensor 520 may detect a nearby object within the ranges of a preset distance, a preset vertical field of view, and a preset horizontal field of view, which are predefined depending on specifications thereof. The radar sensor 520 may include a front radar sensor 521, a left radar sensor 522, a right radar sensor 523, and a rear radar sensor 524 installed at the front, left, right, and rear of the vehicle, respectively, but the installation location of each radar sensor and the number of radar sensors installed are not limited to a specific embodiment. The autonomous driving integrated controller 600 may determine a location (including a distance to a corresponding object), speed, and moving direction of the corresponding object using a method of analyzing power of electromagnetic waves transmitted and received through the radar sensor 520.

The camera sensor 530 may detect a nearby object outside the vehicle by photographing the periphery of the vehicle and detect a nearby object within the ranges of a preset distance, a preset vertical field of view, and a preset horizontal field of view, which are predefined depending on specifications thereof.

The camera sensor 530 may include a front camera sensor 531, a left camera sensor 532, a right camera sensor 533, and a rear camera sensor 534 installed at the front, left, right, and rear of the vehicle, respectively, but the installation location of each camera sensor and the number of camera sensors installed are not limited to a specific embodiment. The autonomous driving integrated controller 600 may determine a location (including a distance to a corresponding object), speed, and moving direction of the corresponding object by applying predefined image processing to an image captured by the camera sensor 530.

In addition, an internal camera sensor 535 for capturing the inside of the vehicle may be mounted at a predetermined location (e.g., rear view mirror) within the vehicle. The autonomous driving integrated controller 600 may monitor a behavior and state of the occupant based on an image captured by the internal camera sensor 535 and output guidance or a warning to the occupant through the output unit 300.

As illustrated in FIG. 1, the sensor unit 500 may further include an ultrasonic sensor 540 in addition to the LiDAR sensor 510, the radar sensor 520, and the camera sensor 530 and further adopt various types of sensors for detecting a nearby object of the vehicle along with the sensors.

FIG. 2 illustrates an example in which, in order to aid in understanding the present embodiment, the front LiDAR sensor 511 or the front radar sensor 521 is installed at the front of the vehicle, the rear LiDAR sensor 513 or the rear radar sensor 524 is installed at the rear of the vehicle, and the front camera sensor 531, the left camera sensor 532, the right camera sensor 533, and the rear camera sensor 534 are installed at the front, left, right, and rear of the vehicle, respectively. However, as described above, the installation location of each sensor and the number of sensors installed are not limited to a specific embodiment.

Furthermore, in order to determine a state of the occupant within the vehicle, the sensor unit 500 may further include a bio sensor for detecting bio signals (e.g., heart rate, electrocardiogram, respiration, blood pressure, body temperature, electroencephalogram, photoplethysmography (or pulse wave), and blood sugar) of the occupant. The bio sensor may include a heart rate sensor, an electrocardiogram sensor, a respiration sensor, a blood pressure sensor, a body temperature sensor, an electroencephalogram sensor, a photoplethysmography sensor, and a blood sugar sensor.

Finally, the sensor unit 500 additionally includes a microphone 550 having an internal microphone 551 and an external microphone 552 used for different purposes.

The internal microphone 551 may be used, for example, to analyze the voice of the occupant in the autonomous driving vehicle 1000 based on AI or to immediately respond to a direct voice command of the occupant.

In contrast, the external microphone 552 may be used, for example, to appropriately respond to safe driving by analyzing various sounds generated from the outside of the autonomous driving vehicle 1000 using various analysis tools such as deep learning.

For reference, the symbols illustrated in FIG. 2 may perform the same or similar functions as those illustrated in FIG. 1. FIG. 2 illustrates in more detail a relative positional relationship of each component (based on the interior of the autonomous driving vehicle 1000) as compared with FIG. 1.

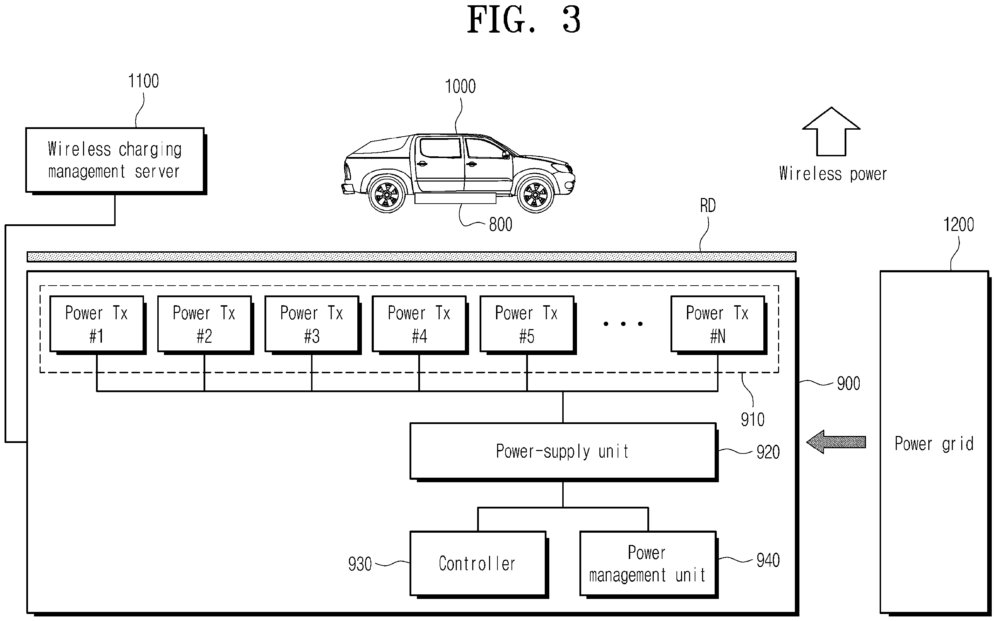

FIG. 3 is a schematic diagram illustrating a system for wireless charging during vehicle driving.

Referring to FIG. 3, the system may include a vehicle 1000 containing a rechargeable battery 800, a wireless charger 900 located below a road (RD), a wireless charging management server 1100, and a power grid 1200. Wireless charging refers to charging the vehicle's battery (800) wirelessly. However, in the explanation provided later, this will be simply referred to as (wirelessly) charging the vehicle or the vehicle performing the (wireless) charging. This term or expression will be used and interpreted to include the wireless charging of the vehicle's battery.

A wireless transmission coil (or a wireless power transmitter) 910 of the wireless charger 900 may be buried under a road (RD). Accordingly, the vehicle 1000 may perform wireless charging while driving on the road (RD).

The wireless charger 900 may include a power-supply unit 920 for supplying power to the wireless transmission coil 910, a controller 930 for controlling the power-supply unit, and a power measurement unit 940 for power measurement.

The wireless charging management server 1100 may manage the wireless charger 900, and may control initiation and termination of wireless charging of the vehicle 1000.

The power grid 1200 refers to a power system, for example, a power transmission system, a power distribution system, and a power generation system that can supply power to the wireless charger 900.

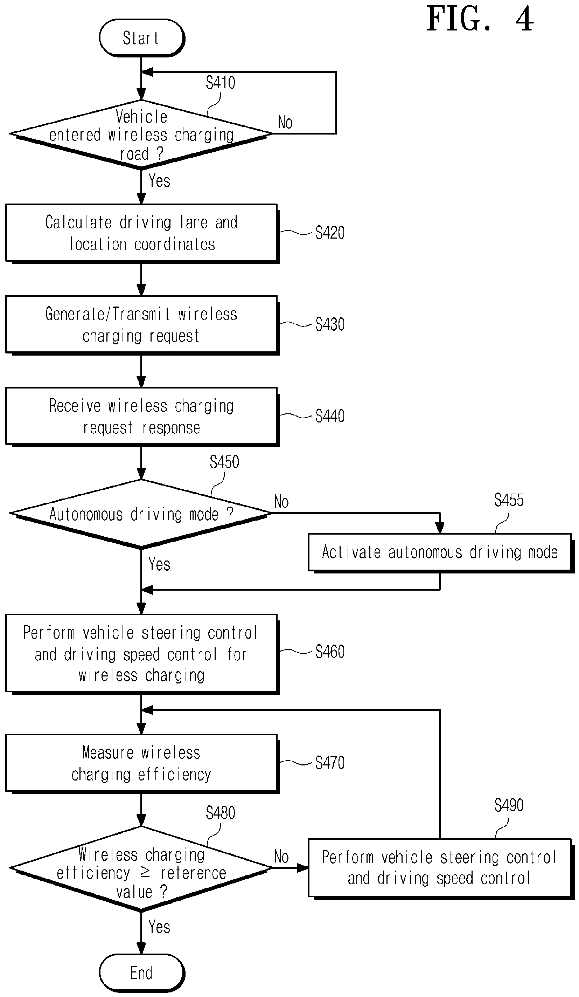

FIG. 4 is a flowchart illustrating a method for controlling wireless charging of a vehicle according to the proposed technology. The operation according to the flowchart of FIG. 4 may be performed by the wireless charging management server 1100 or components (e.g., a controller, a processor, etc.) of the wireless charging management server 1100, but is not limited thereto.

The vehicle 1000 may include vehicle sensors 210 to 260 in addition to the battery 800. The vehicle sensor may include a positioning sensor 260 such as a GPS receiver and a speed sensor 230 for sensing the driving speed.

FIG. 4 is a flowchart illustrating a method for controlling wireless charging of a vehicle driving on a road, and shows a wireless charging control method that ensures wireless charging efficiency of a preset reference value or greater using information on the wireless charging vehicle 1000, information about a wireless charging road and a wireless charger, etc.

The wireless charging vehicle 1000 may include a transceiver for transmitting and receiving messages to and from the wireless charging management server 1100, the power grid 1200 or the wireless charger 900; and a controller for controlling the transceiver.

Additionally, the wireless charging vehicle 1000 may include a wireless power receiver that receives wireless power from the wireless power transmitter.

The wireless charging vehicle 1000 may check whether the vehicle 1000 has entered a wireless charging road(S410). The "wireless charging road" refers to a road where at least some of the wireless chargers (900) are embedded in the lower part of the road, as illustrated in Figure 3, allowing a rechargeable battery of vehicles to be wirelessly charged during driving on the road.

As the vehicle 1000 enters a wireless charging road, the wireless charging vehicle 1000 may calculate a driving lane and location coordinates thereof (S420).

Then, the vehicle 1000 may generate a wireless charging request and may transmit the generated wireless charging request (S430).

The wireless charging request may include at least one of vehicle identification information, current driving lane information, and location coordinate information.

The vehicle 1000 may receive a wireless charging response from the wireless power charger in response to the wireless charging request. The wireless charging response may include at least one of information about a lane which allows the vehicle to be wirelessly charged during driving, information about wireless charging line alignment, or information about a driving speed at which a wireless charging of the vehicle is allowed during driving. The wireless charging line alignment information may include a virtual line for interconnecting coils (or centers of the coils) of a plurality of wireless power transmitters installed under a surface of the road or relative position information between the virtual line and the lanes on the road. The information about a lane may indicate which lanes on the wireless charging road allow the vehicle to perform wireless charging if there are multiple lanes. For example, if another vehicle is already wirelessly charging in a particular lane and the capacity of the wireless charger or the wireless power transmitter is limited, preventing further provision of wireless charging, then information about that lane can be excluded from the lane information. The information about a driving speed may indicate the speed at which the vehicle can achieve wireless charging or attain a certain level of charging efficiency while driving.

The vehicle 1000 may check whether an autonomous driving mode is activated (S450). When the autonomous driving mode is not set, the vehicle 1000 may activate the autonomous driving mode (S455).

Thereafter, the vehicle 1000 may control the vehicle steering for wireless charging and the driving speed for wireless charging (S460). Such vehicle steering control may be performed based on the information about the lane which allows the vehicle to be wirelessly charged and the information about wireless charging line alignment that are included in the received wireless charging response. Such driving speed control may be performed based on the information about the driving speed at which a wireless charging of the vehicle is allowed included in the wireless charging response.

While vehicle steering control and driving speed control are performed, the vehicle 1000 can perform wireless charging while driving.

The vehicle 1000 may measure wireless charging efficiency while performing wireless charging (S470). When the wireless charging efficiency is equal to or higher than a preset reference value, the wireless charging procedure of the driving vehicle may be terminated.

When the wireless charging efficiency is less than the preset reference value, the vehicle 1000 may perform vehicle steering control or driving speed control (S490).

Although the wireless charging efficiency is equal to or higher than the preset reference value, the vehicle 1000 can continue to monitor the wireless charging efficiency (S470). If the wireless charging efficiency is less than the preset reference value, the vehicle 1000 can perform the vehicle steering control or the driving speed control (S490).

Meanwhile, measurement of wireless charging efficiency can be performed by the wireless charger 900. In this case, comparison between the wireless charging efficiency and the reference value can also be performed by the wireless charger 900. If the wireless charging efficiency is less than the reference value, the wireless charger 900 may generate a command or control value for vehicle steering control or driving speed control. The generated control value may be transmitted to the vehicle 1000, and the vehicle can perform vehicle steering control or driving speed control using the received control value.

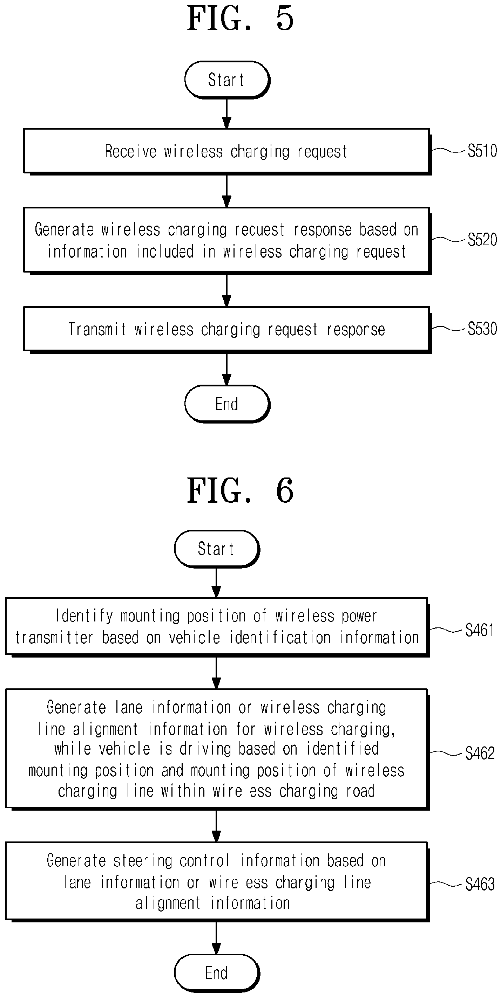

FIG. 5 is a flowchart illustrating a method for controlling wireless charging of a vehicle according to the proposed technology. The operation according to the flowchart of FIG. 5 may be performed by the wireless charger 900, but is not limited thereto. In FIG. 5, the same description as those of FIG. 4 will herein be omitted for brevity.

The wireless charger 900 may receive a wireless charging request from the wireless charging vehicle 1000 (S510). The wireless charging request may include at least one of vehicle identification (ID) information, current driving lane information, and location coordinate information.

The wireless charger 900 may generate a wireless charging request response based on information included in the wireless charging request (S520).

The wireless charging response may include at least one of information about a lane which allows the vehicle to be wirelessly charged during driving, information about wireless charging line alignment, or information about a driving speed at which a wireless charging of the vehicle is allowed during driving.

The wireless charger 900 may transmit the generated wireless charging request response (S530).

FIG. 6 is a flowchart illustrating a method for controlling wireless charging of the vehicle according to the proposed technology. The operation according to the flowchart of FIG. 6 may be performed by the wireless charging vehicle 1000, components (e.g., a controller, a processor, etc.) of the vehicle 1000, or the wireless charger 900, but is not limited thereto. In FIG. 6, the same description as those of FIG. 4 will herein be omitted for brevity.

FIG. 6 is a flowchart illustrating a vehicle steering control method for wireless charging and driving speed control for wireless charging (S460 or S490) of FIG.4.

An entity (or subject) that performs the flowchart of FIG. 6 will hereinafter be referred to as "device" for convenience of description.

The device may identify the mounting position at which the wireless power receiver is installed, based on the vehicle identification information (S461).

The device may generate lane information or wireless charging line alignment information for wireless charging while the vehicle is driving based on the mounting position of the identified wireless power receiver and the mounting position of the charging line within the wireless charging road (S462).

The device may generate steering control information based on lane information or wireless charging line alignment information (S463). If the steering control information is generated by the wireless charger 900, the generated steering control information may be transmitted to the vehicle 1000.

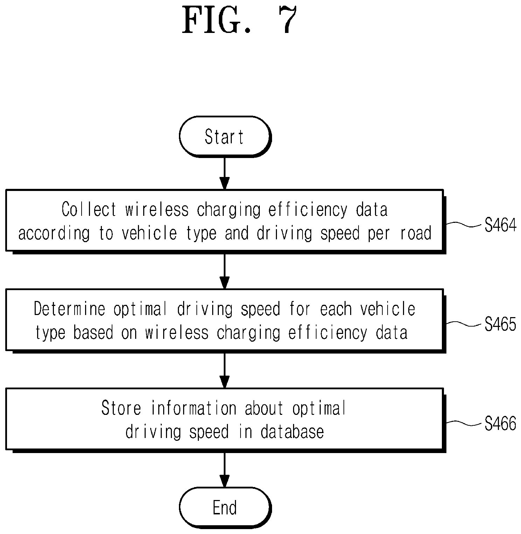

FIG. 7 is a flowchart illustrating a method for controlling wireless charging of the vehicle according to the proposed technology. The operation according to the flowchart of FIG. 7 may be performed by the wireless charging vehicle 1000, components (e.g., a controller, a processor, etc.) of the vehicle 1000, or the wireless charger 900, but is not limited thereto. In FIG. 7, the same description as those of FIG. 4 will herein be omitted for brevity.

The method of FIG. 7 is used to manage wireless charging efficiency related to the driving speed associated with wireless charging while the vehicle is driving on the road. In more detail, the method of FIG. 7 shows a procedure for collecting the wireless charging efficiency data according to the vehicle type and the driving speed for each road, and a procedure for determining the optimum driving speed at which the wireless charging efficiency can be maximally or optimally secured.

The wireless charger 900 can collect charging efficiency data according to the type of vehicle equipped with a wireless power receiver and the driving speed for each road (S464).

The vehicle 1000 that supports wireless charging while driving includes the wireless power receiver. The charging efficiency of wireless charging during vehicle driving may vary depending on road conditions or driving conditions. In addition, the charging efficiency of wireless charging during vehicle driving may vary depending on the vehicle type. Therefore, data about wireless charging efficiency during vehicle driving can be collected first, and for example, data according to the following table can be collected.

**[Table 1]**

| Vehicle Types | Road names | Wireless Charging Efficiency |
|---|---|---|
| A | 'a' road | K1 |
| | 'b' road | K2 |
| | 'c' road | K3 |
| ... | ... | ... |
| B | 'a' road | K5 |
| | 'b' road | K6 |
| | 'c' road | K7 |
| ... | ... | ... |
| C | 'a' road | K8 |
| | 'b' road | K9 |
| | 'c' road | K10 |

In Table 1, wireless charging efficiency (K1, K2,..., K10, etc.) are numerical values representing the efficiency and may be the same or different from each other. In Table 1, only three vehicle types (A, B, C) are shown, but data on many more vehicle types can be collected.

Additionally, although the collected data is described as "vehicle type" in Table 1, the scope or spirit of the present disclosure is not limited thereto, and it should be noted that the content of Table 1 is based on the assumption that there are vehicle types equipped with the same wireless power receiver. In fact, assuming that different wireless power receivers with different characteristics are allocated to the respective vehicles, data should be collected based on "vehicle" or "vehicle model name" instead of "vehicle type".

The wireless charger 900 may determine the optimal driving speed for each vehicle type on each road based on the collected charging efficiency data (S465). Determination of the optimal driving speed for each vehicle type on each road may be through machine learning using the wireless charging efficiency data mentioned in Table 1. Additionally, the wireless charger 900 can update the optimal driving speed for each vehicle type on each road using newly collected data.

The wireless charger 900 may store information about the determined optimal driving speed in a database (S466).

The procedure related to FIG. 7 may be repeated periodically or aperiodically, such that the optimal driving speed for each vehicle type for each road to improve wireless charging efficiency may be continuously updated and changed.

Although the above-described embodiments of the present disclosure have disclosed that the device (or apparatus) for controlling a user interface (UI) and components included therein perform such control for convenience of description, the device (or apparatus) and the components belonging thereto are names only and the scope of rights is not dependent thereon.

In other words, the proposed technology of the present disclosure may be performed by devices having names other than the control device. In addition, the method, scheme, or the like described above may be performed by software or code readable by a computer or other machine or device for vehicle control.

In addition, as another aspect of the present disclosure, the operation of the proposed technology described above may be provided as code that may be implemented, realized, or executed by a "computer" (a generic concept including a system on chip (SoC) or a (micro) processor) or a computer-readable storage medium, a computer program product, or the like storing or containing the code. The scope of the present disclosure is extendable to the code or the computer-readable storage medium or the computer program product storing or containing the code.

Detailed descriptions of preferred embodiments of the present disclosure disclosed as described above have been provided such that those skilled in the art may implement and realize the present disclosure.

Although the present disclosure has been described above with reference to preferred embodiments, those skilled in the art will understand that various modifications and changes can be made to the present disclosure set forth in the claims below.

Accordingly, the present disclosure is not intended to be limited to the embodiments shown herein but is to be accorded the widest scope consistent with the principles and novel features disclosed herein.

As is apparent from the above description, the method and apparatus according to the embodiments of the present disclosure have the following effects.

The embodiments of the present disclosure can appropriately control or manage wireless charging efficiency or wireless power reception efficiency through steering control or driving speed control.

The embodiments of the present disclosure can determine the vehicle's driving speed at which wireless charging efficiency or wireless power reception efficiency is sufficient.

It will be apparent to those skilled in the art that various modifications and variations can be made in the present disclosure without departing from the spirit or scope of the disclosures. Thus, it is intended that the present disclosure covers the modifications and variations of this disclosure provided they come within the scope of the appended claims and their equivalents.

## Claims

1. A vehicle for performing wireless charging during vehicle driving, comprising:
a wireless power receiver configured to wirelessly receive power from a wireless power transmitter;
a transceiver configured to transmit and receive messages to and from the wireless power transmitter; and
a controller configured to control the wireless power receiver,
wherein the controller is configured to:
generate a charging request including any one of vehicle identification information, a driving lane of the vehicle, and location coordinates of the vehicle, and transmit the charging request to a wireless power transmission system;
receive a charging request response from the wireless power transmission system in response to the charging request; and
perform vehicle steering control and driving speed control based on the charging request response.

2. The vehicle according to claim 1, wherein the controller is configured to:
determine whether the vehicle has entered a wireless charging road during driving, the wireless charging road allowing the vehicle to be wireless charged during driving; and
calculate a driving lane of the vehicle and location coordinates of the vehicle according to an entry of the vehicle into the wireless charging road.

3. The vehicle according to claim 1 or 2, wherein the controller is configured to:
measure efficiency of wireless charging during vehicle driving; and
perform vehicle steering control and driving speed control when the efficiency is less than a reference value.

4. The vehicle according to any one of claims 1 to 3, wherein the controller is configured to:
activate an autonomous driving mode upon receiving the charging request response.

5. The vehicle according to any one of claims 1 to 4, wherein the charging request response includes:
at least one of information about a lane of a wireless charging road which allows the vehicle to be wireless charged, charging line alignment information, and information about a driving speed at which a wireless charging of the vehicle is allowed.

6. A wireless power charger for wireless charging of a vehicle during driving, comprising:
a wireless power transmitter configured to wirelessly transmit power to a wireless power receiver;
a transceiver configured to transmit and receive messages to and from the wireless power receiver; and
a controller configured to control the wireless power transmitter,
wherein the controller is configured to:
collect wireless charging efficiency data according to a vehicle type and a driving speed for each road; and
determine an optimal driving speed for each vehicle type based on the wireless charging efficiency data.

7. The wireless charger according to claim 6, wherein the controller is configured to:
transmit an optimal driving speed for each vehicle type to a wireless charging vehicle, wherein
the wireless charging vehicle is controlled to travel at the optimal driving speed.

8. A wireless power charger for wireless charging of a vehicle during driving, comprising:
a plurality of wireless power transmitters configured to wirelessly transmit power to a wireless power receiver;
a transceiver configured to transmit and receive messages to and from the wireless power receiver; and
a controller configured to control the wireless power transmitters,
wherein the controller is configured to:
identify a mounting position of the wireless power receiver based on vehicle identification information received from a vehicle for wireless charging; and
generate information about a lane for wireless charging or information about a wireless charging line alignment for wireless charging during driving based on the identified mounting position and a mounting position of a charging line on a wireless charging road during driving.

9. The wireless charger according to claim 8, wherein the controller is configured to:
generate steering control information of the vehicle based on the information about a lane for wireless charging during driving and the information about a wireless charging line alignment.

10. The wireless charger according to claim 8 or 9, wherein the information about a wireless charging line alignment includes:
a virtual line configured to interconnect coils of the plurality of wireless power transmitters installed under a surface of the road; and/or
relative position information between the virtual line and lanes on the road.
